# EUROPEAN PATENT SPECIFICATION

(11) **EP 2 072 377 B1**
(45) Date of publication and mention of the grant of the patent: **16.06.2010**
(21) Application number: 07381078.0
(22) Date of filing: 18.12.2007
(51) Int. Cl.: B62D 25/06, B62D 65/06, B60R 16/02

(54) **Procedure for manufacturing vehicle roof panel**
Verfahren zur Herstellung einer Dachverkleidung für ein Fahrzeug
Procédure pour la fabrication de pavillon de toit de véhicule

(43) Date of publication of application: 24.06.2009
(73) Proprietor: GRUPO ANTOLIN-INGENIERIA, S.A., 09007 Burgos (ES)
(72) Inventor: Tabliega García, Santos, 09007 Burgos (ES); Gutiérrez Fernández, Roberto, 24004, LEÓN (ES); Escudero Delgado, Jesus Vicente, 09904 Burgos (ES)
(74) Representative: Capitan Garcia, Maria Nuria

(56) References cited:
- JP-A- 2002 154 391
- US-A1- 2006 061 145

## Description

### OBJECT OF THE INVENTION

The present invention refers to a procedure for obtaining a panel for the interior of automobile vehicles, specifically panels of the sandwich type formed by more than one layer, and which incorporate between two of these layers the cabling for electrical supply of various devices which are installed on the panel. In addition, the cabling terminations are provided with connectors which connect to the devices designed to be connected which are installed on the panel and which require an electrical connection.

The invention is characterised by obtaining a roof panel with integrated cabling by means of a procedure for manufacturing roof panels with the cabling integrated between the layers which make up the panel, with the connectors joined to the cabling during the manufacturing process of said panel.

With this objective, the invention consists of a procedure for obtaining a roof panel with integrated cabling and connectors in such a way that the holes for incorporating the devices designed to be electrically connected are made once the panel has been formed.

### BACKGROUND TO THE INVENTION

Currently, many procedures are known for obtaining covered stratified products for use inside automobiles comprising
- a first layer formed by an initial layer of covering applied on the concealed face of the support, that is, the opposing face where the decorative covering is located.
- a second layer formed by a support (which can be composed in turn of various layers which together form the support);
- and a third layer formed by a second layer of decorative covering applied on the displayed face of the support, that is that which is in visual contact with the vehicle user;

This type of layering is formed in a mould in order to obtain a formed layer which will become the roof panel.

Normally roof panels, in addition to their aesthetic function (which is provided by the displayed covering), and a structural function (which is provided by the central ore, reinforcements and the adhesive), incorporate other elements to improve the vehicle users' comfort, such as elements which incorporate, among others, a lighting function. This lighting is present in the functional elements incorporated in the roof panel such as, for example, consoles, sunshades or handgrips.

The electrical current for feeding these devices comes from the vehicle's general supply through a cable network designed to reach each of the electrically connected devices incorporated in the panel. In order to make the connections between the cabling and the devices designed to be connected electrically each one of the cables in the network is provided with a connector at one end designed to connect with the corresponding connector for the device designed to be electrically connected.

Normally, this cabling is arranged in the roof panel joined to the concealed face thereof, for example, by means of an adhesive. The attachment of the panel cabling is normally made when the product is finished, that is, once the covering layer has been formed, and when the requisite holes have been made to incorporate the different devices designed to be electrically connected.

The problem of making the cabling adhere to the panel is that when during its useful life it is subjected to high temperatures, the adhesive may degrade causing the cabling to become detached. This generates noise inside the vehicle which reduces the user's degree of comfort.

Another means of joining this cabling to the panel may be by using clips or other attachment elements. These elements run the risk of deteriorating and breaking during the useful life of the panel also causing the cabling to become detached from the panel and thus causing noise.

One way of resolving this problem is to integrate this cabling between the layers which form the roof panel during its manufacturing process. In this way it is possible to affix the cabling to the panel without any risk of it becoming detached as it forms and integral part of the panel.

Patent document JP2002154391 shows a procedure for manufacturing vehicle roof panel characterised in that it comprises the following stages:
a) An initial layer is provided formed by a first covering layer designed to be situated on the concealed face of the roof panel;
b) The first layer formed by an initial covering layer (1), where, in this first layer, a first face (1.1)is defmed designed to receive cabling (11); and the second face (1.2) facing the first (1.1), designed to remain facing the vehicle roof plate (4);
c) A flat cabling configuration (11) is extended on the first face (1.1) of the first covering layer (1) with connectors (12) on its terminations where these connectors (12)are designed to make an electrical connection;
d) A roof panel (5) formation mould (14) is provided, comprising a mould (14.1) and a countermould (14.2);
e) The remaining layers (16) which make up the roof panel (5) are incorporated in the formation mould (14), with these layers comprising at least one support (2) and a second decorative covering layer (3), with said layers (16) coinciding with the first face (1.1) of the first covering layer (1) such that the cabling (11) remains situated between the first covering layer (1) and the other layers (16) provided;
f) The layering is formed by closing the formation mould (14) in order to obtain the formed layers (17);
g) The formation mould (14) is opened and the formed layering (17) in its interior is removed,
. The root arrangement of this document is provided with a flat cabling configuration integrated in the layers which make up the panel, more specifically arranged between the covering layer of the concealed face and the remaining layers which make up the covering layer. This cabling is also provided with connectors joined to the terminations of the cabling.

In this case, the integration of the cabling with the connectors is made once the various cuts have been made for the different holes designed to house the devices for electrical connection arranged at the terminations of the cabling in these holes during the panel formation process. In this way marks are not made on the decorative covering of the panel during its formation process caused by the connector dimensions.

The problem with this process is the fact that the various layers and coverings need to be lined up with the holes in an operation prior to the formation with the risk that the holes in different layers do not fully coincide as the layers are not solid to each other.

### DESCRIPTION OF THE INVENTION

Therefore, it was considered desirable to develop a procedure for manufacture of roof panels with integrated cabling between the layers which make up the panel, with the connectors joined to the cabling in such a way that the holes made in the panel for incorporating devices designed to be electrically connected, are made once the panel has been formed so that it maintains the decorative aspect of the covering in ideal conditions.

In addition, this process ensures that the cabling with its connectors remains in a correct position coinciding with each of the devices designed to be connected electrically, in order to ensure correct connection, once the panel has been formed with the cabling and corresponding connectors.

Furthermore, this procedure ensures that neither the connectors nor the cabling deteriorate, or that these elements do not become detached during the panel formation process.

The procedure in this invention for obtaining a vehicle roof panel consists of the following stages:
a) an initial layer is provided formed by a first covering layer designed to be situated on the hidden face of the roof panel;
b) The first layer formed by an initial covering layer, is attached in an extended manner on a frame where in this initial layer, a first face is identified designed to receive cabling; and the second face facing the first, designed to remain facing the vehicle roof plate;
c) A flat configuration cabling is extended on the first face of the first covering layer with connectors at its terminations where these connectors are designed to make an electrical connection; and, where the first covering layer has cuts for the passage of at least one connector to the second face of the first covering layer in such a way that the connector(S) situated on the second face are positioned with respect to the frame in correspondence with the devices designed to be mounted on the roof panel;
d) A roof panel mould is provided comprising a mould and a countermould, in which the arrangement formed by the frame is affixed to the first covering layer, the cabling and its connectors in such a way that, either the mould or the countermould are provided with cavities designed to house the connectors;
e) The remaining layers which make up the roof panel are incorporated in the formation mould, with these layers comprising at least one support and a second decorative covering layer, with said layers coinciding with the initial face of the first covering layer, such that the cabling remains situated between the first covering layer and the other layers provided;
f) The layering is formed by closing the formation mould in order to obtain the formed layers.
g) The formation mould is opened and the formed layering in its interior removed.
h) The areas corresponding to the devices to be mounted on the roof panel are cut out;

In order to obtain the roof panel of the invention a minimum of three layers are provided.

The first of these comprises an initial covering layer of the concealed face. This layer closes the arrangement formed by the three layers of the concealed face facing the vehicle roof plate. The first covering layer of the concealed face, may be formed by paper card or felt.

The second layer consists of a support which provides the requisite structural form of the roof panel, and additionally this layer may have an acoustic function. This layer may be formed in turn by various layers such as fibrous blanket, foam, reinforcements, adhesives etc.

Finally, the third layer consists of a second decorative covering layer, designed to provide the external aspect on the panel, this is the layer which is in direct contact with the vehicle interior and which the vehicle user will note through visual and/or tactile contact. This second layer in turn may consist of a fabric which will provide the decorative visual aspect, and a layer of foam which provides soft contact on pressing the panel.

In the first stage of the procedure, the initial covering layer with an concealed face, extended and with specific dimensions is provided, according to the type of panel desired.

This first covering layer is fixed on a frame in such a way that this first layer is referenced with respect to the frame.

In the first covering layer, two faces may be identified, an initial face, designed to receive the cabling and which will be in contact with the rest of the layers which make up the covering; and a second face, designed to face the vehicle plate once the panel has been arranged thereon.

In this first stage, the first covering layer is arranged on the frame with the first face accessible for laying the cable. In order to do so, the flat configuration cabling is arranged with the connectors on the initial face of the first covering layer. In addition, the initial layer is provided with cuts which correspond to each of the cabling terminations which incorporate a connector in the event that these cable terminations with the connectors are situated inside the perimeter of the first covering layer. These cabling terminations with the connectors situated inside the perimeter of the first covering layer, shall be termed the first arrangement.

In the event that the cable terminations with the connectors are situated outside the first covering layer perimeter (which shall be termed the second arrangement) as might be the case of the cabling termination with connector designed to connect to the general supply of the vehicle, cuts may also be made to ensure that they pass through the second face of the first layer. Therefore, the two possibilities are considered in this second case, irrespective of whether or not cuts are provided. In the event that these cuts are not present, these cabling terminations with the connectors shall remain on the first face of the first covering layer.

Once the cabling with the connectors has been arranged, the cabling connections with the connectors are passed through the cuts of the first layer in such a way that they pass through the second face which forms the first covering layer. Therefore, on one side of initial layer is the main part of the cabling together with the cable terminations with the connectors which extend from the perimeter of the first covering layer (in the event that there are no cuts for this second arrangement of cabling terminations with connectors which are situated outside the perimeter of the first covering layer); and the cabling terminations with the connectors which remain inside the layer of the second face of the covering layer.
In order to prevent the cabling from losing its position during handling of the layer, this cabling may be affixed, for example, to the first covering layer, using adhesive means.

Furthermore, in order to facilitate the positioning of the cabling with the connectors with respect to the covering layer, positioning means may be used such as a light beam which by means of light markings indicates references on the covering layer in order to position the cabling. These marks may serve to position the cabling in an indirect manner through the cuts made on the first covering layer, so that the references are used to make the cuts where these indicate. Having obtained the cuts, the cabling positioning can be immediately carried out. In the same way light marks may be used to reference the position of the adhesive means which may be used to affix the cabling to the first covering layer.
In the event that the positioning is made directly, the light marks directly indicate the position of the cabling on the first covering layer.

In order to obtain the cuts of the first covering layer designed to permit the transit of the cable terminations with the connectors from a first face to a second face of the first layer, various possible means are considered. One of these could be the supply of the layer with the cuts already applied thereto, therefore, in this case the layer would be provided with the corresponding cuts from the start of the process. The other possibility would be to make the cuts once the layer has been positioned on the frame. These cuts may be made using known methods for carrying out cuts on layers of material.
Having ensured that the cabling terminations with the connectors are placed on the second face of the first layer, the position they occupy is such that they are situated inside the areas designed to be cut once the panel is formed for placing the devices designed to be installed on the roof panel. These devices may be directly those designed to be electrically connected, or they may be devices placed close by, which do not require electric current, however they are provided with a space which enables the cabling terminations with the connectors to be accommodated, taking into account their dimensions. This will be the case when the areas designed to be cut for mounting the devices designed to be electrically connected are not of sufficient size to accommodate the corresponding cabling termination with the connector and furthermore, when, arranged in a zone close to this area, is another area which is larger in size designed for the installation of a device which does not require electric current, such as a spectacles holder.

Therefore, this will be the position which the cabling terminations with the connectors will occupy with respect to the second face of the first layer during the formation of the arrangement. In this way, it is ensured that the marks which the connectors may leave on the decorative covering during formation, will not affect the aesthetic aspect of the final product, as these are areas of the panel which will be removed to leave space for the assembly of the devices designed to be mounted on the roof panel.

In order to prevent the cable terminations with the connectors losing their position during handling of the first covering layer, or either during the formation process, they may be affixed to the second face of said first layer by means, for example, of adhesive.

Subsequently, a formation mould for roof panel is provided in order to carry out the formation of the arrangement formed by the first covering layer, cabling and connectors, together with the remaining layers which make up the layer covering. For this purpose the formation mould is provided with a mould and a countermould. The arrangement formed by the frame with the covering layer, the cabling and its connectors are fixed either to the mould or to the countermould in such a way that they are referenced with respect to the formation mould so that having formed the layering with the total number of layers which make up the covering layer, the cabling (and in particular the cable terminations with the connectors), they are located in their correct position.

In order to prevent deterioration of the connectors when the mould is closed, either the mould or the countermould is provided with cavities for housing the connectors situated in the cabling terminations.

The arrangement of the first covering layer with respect to the other layers which make up the panel is made in such a way that the initial face of the first covering layer faces the remaining layers which form the panel.

The remaining layers which make up the panel are arranged on the other part of the mould.
In order to facilitate the attachment and positioning of the arrangement formed by the frame with the first covering layer, the cabling and the connectors in the formation mould, a support may be provided which is solid thereto.

In the event that the positioning operations of the cable on the covering and the transit of the terminations thereof with the connectors have not been made in the formation mould itself, having made such operations outside it, it will be necessary to transfer all the elements accompanying the frame to the formation mould. This operation may be carried out manually, with an operator in this case making the transfer to the formation mould; or this process shall be automatic using, for example, a robot.

When all the elements have been arranged on the formation mould, the mould is closed and the layers are formed so that when the mould is opened the formed layering is obtained.

When the mould is closed and prior to commencing the formation stage, the frame may be removed from the formation mould.

Having arranged the formed layers with the cabling and the connectors already formed, holes are then cut for accommodating the devices designed to be connected electrically, as well as for devices which do not require electrical current.

In the event that the terminations of the cabling with the connectors have been affixed to the second face of the first covering layer, in order to maintain their position, these means of attachment are removed prior to making the cuts.

Furthermore, in order to protect the cabling terminations with the connectors during the cutting operation, they may be affixed to the second face of the covering layer outside the area designed to be cut.

Having made the cuts for the holes in the formed layering, the cable terminations with the connectors may be placed in the corresponding holes, in the event that these have been affixed outside the cut area in order to leave them in their final position prior to connection with the devices designed to be electrically connected.

### DESCRIPTION OF THE DRAWINGS

The present descriptive report is complemented by a set of plans illustrating a preferred embodiment of the invention but which is in no way restrictive.
Figure 1 represents a perspective view of an example of an embodiment of an invention showing the roof panel, the vehicle roof plate and the devices designed to be connected electrically and which are installed on the panel.
Figure 2 shows a diagram of a possible configuration of the layers which make up the panel.
Figure 3 shows a diagram of the frame with the first covering layer of the concealed face affixed thereto.
Figure 4 shows a diagram of the positioning means used to reference the cabling with respect to the initial covering layer.
Figure 5 shows a diagram of the first covering layer with the attachment means used, in order to affix the cabling to the first covering layer.
Figure 6 shows a diagram of the first covering layer with the cuts made on said first layer.
Figure 7 shows a diagram of a flat cabling configuration with the connectors positioned on the first face of the first covering layer.
Figure 8 shows a diagram of the first covering layer showing its second face and a first arrangement formed by the cabling terminations with the connectors passing through the cuts of said first layer and the cabling terminations with the connectors which remain outside the first covering layer.
Figure 9 shows a diagram of the attachment means used in order to fix the position of the first arrangement formed by the cabling terminations with the connectors to the second face of the first covering layer.
Figure 10 shows a diagram of the layering formation mould.
Figure 11 shows a diagram of the formed layering once it has left the formation mould and a diagram of the formed layering once the means of attachment of the first arrangement formed by the cabling terminations with the connectors have been removed.
Figure 12 shows a diagram of the formed layering with the first arrangement formed by the cabling terminations with the connectors affixed to the second face of the first covering layer outside the areas which are to be cut in order to house the devices designed to be electrically connected.
Figure 13 shows a diagram of the layering formed with the cut holes and with the first arrangement formed by the cabling terminations with the connectors positioned in these holes.

### PREFERRED EMBODIMENT OF THE INVENTION

In the light of the foregoing, the present invention refers to a procedure for manufacturing roof panels with integrated cabling between the layers which make up the panels, with the connectors joined to the cabling during the manufacturing procedure of said panel.

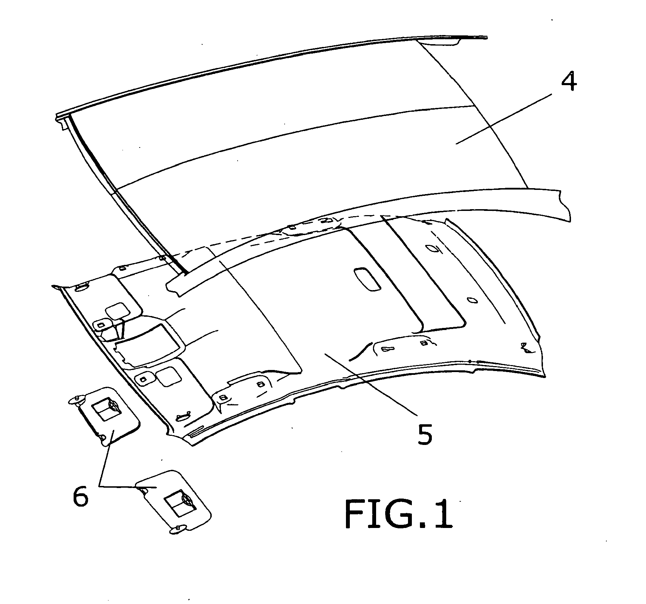

Figure 1 represents a perspective view of an example of an embodiment of an invention showing the roof panel (5), the vehicle roof plate (4) and the devices (6) designed to be connected electrically and which are mounted on the panel.

The roof panel (5) is fixed to the vehicle roof plate (4) with the first covering layer (1) facing it, in such a way that the second decorative covering layer (3) is the visible part of the panel (5) in the interior of the vehicle.

The devices (6) are those designed to be installed on the roof panel (5) and which are normally fixed to the vehicle roof plate (4) so that it supports the forces deriving from their operation. These devices (6) may be roof consoles, which may also have a lighting function, they may be prepared to accommodate small objects; sun shades which may be provided with a lighting function, for example, when the passenger mirror cover is opened,; the handgrips situated at the sides of the panel (5) corresponding to the vehicle seats which may incorporate a lighting function; spectacles holder; etc.

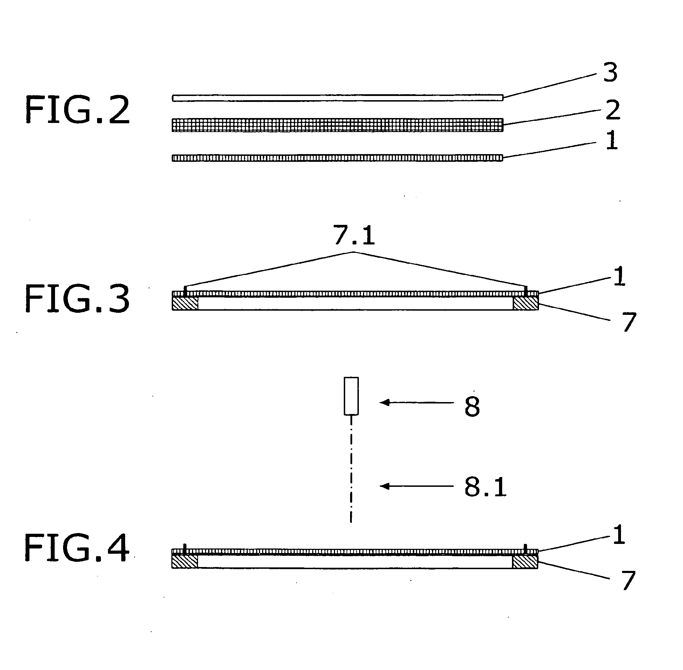

Figure 2 shows a diagram of a possible configuration of the layers which make up the layering which will form the panel (5).

The layering which makes up the panel (5), in a specific configuration, may be formed by an initial layer constituted by a first covering layer (1) of the concealed face; by a second layer termed support (2) which in turn may be formed by a blanket of polyurethane foam, reinforcement fibres and adhesive; and a third layer formed by a second decorative covering layer (3).

Figure 3 shows a diagram of the frame (7) with the first covering layer (1) of the concealed face affixed thereto.

For correct referencing of the first covering layer (1) and in order to facilitate work thereon, a frame is provided (7). Attachment of the first covering layer (1) on the frame (7) may be made using clamps (not shown), piercing elements (7.1) or any other known attachment element.

Figure 4 shows a diagram of the positioning means (8) used to reference the cabling (11) with respect to the first covering layer (1).

In order to locate the position of the cabling (11) on the first layer (1), positioning means (8) may be used which emit a light beam (8.1) which marks the position on the first covering layer (1) using lighting marks.

Positioning of the cabling (11) may be made directly, by affixing it to the first layer (1) in such a way that the light marks indicate the cabling position.

The positioning of the cabling (11) may also be made indirectly, using attachment means (9) to affix the position of the cabling with respect to the first covering layer (1) and which are joined thereto, defining the cabling position (11). In this case the light marks will mark the position which the attachment means (9) should have for subsequent placing of the cabling.

In the same way, cuts (10) may be used for the transit of a first arrangement (12.1) formed by the cabling terminations (11) with the connectors (12). In this case the light marks will mark the position for the cuts (10) for subsequent placing of the cabling.

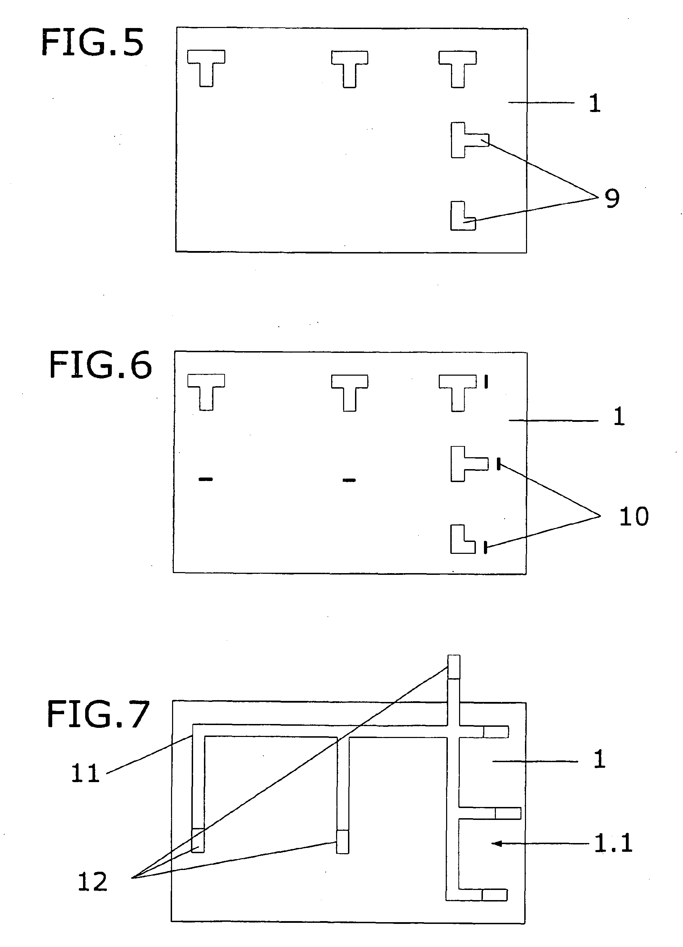

Figure 5 shows a diagram of the first covering layer (1) with the attachment means (9) used, in order to affix the cabling (11) to the first covering layer (1).

In order to affix the cabling (11) to the first covering layer (1) attachment means (9) may be used consisting of double sided adhesive tape.

Figure 6 shows a diagram of the first covering layer (1) with the cuts (10) made on said first layer (1).

The cuts (10) are made on the first covering layer (1) in order to enable the arrangement (12.1) formed by the cabling terminations (11) with the connectors (12) to pass from a first face (1.1) of the layer (1) to a second face (1.2). These cuts (10) may be made on the first layer (1) when it has been affixed to the frame(7), either after providing the attachment means (9) for affixing the cabling (11) to the first layer (1) or either before these attachment means (9) are provided; furthermore, these cuts (10) may be made during a stage prior to the positioning of the first layer (1) on the frame (7) so that the first covering layer (7) is supplied with the cuts (10) already made.

Therefore, in the first covering layer (1) two faces may be distinguished; an initial face (1.1) and a second face (1.2).

Figure 7 shows a diagram of a flat cabling configuration with the connectors positioned on the first face of the first covering layer.

The cabling (11) has a flat configuration so that it comprises a flexible layer on which tracks are printed for conducting the electricity.

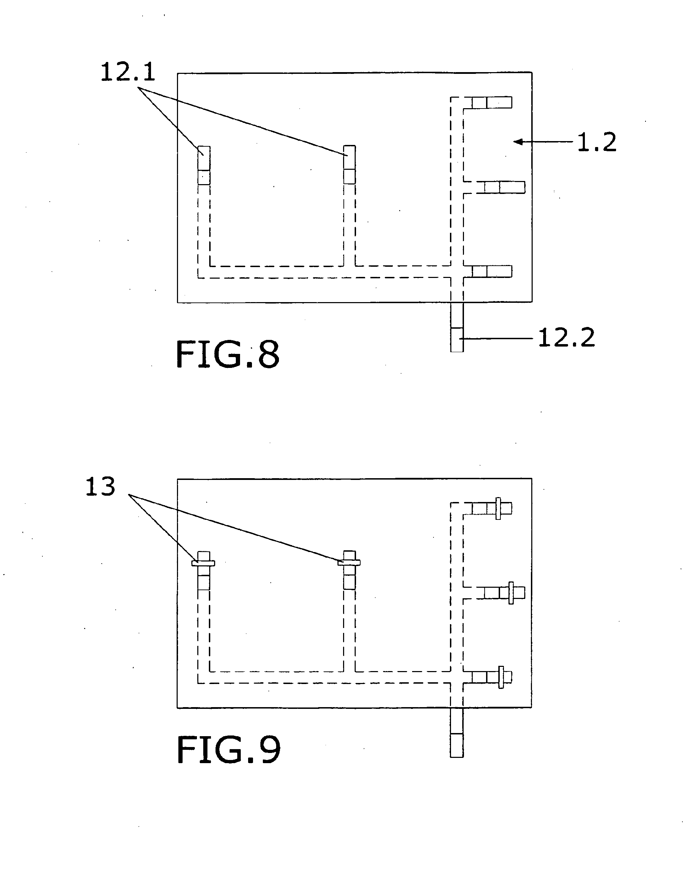

Figure 8 shows a diagram of the first covering layer (1) showing its second face (1.2) and a first arrangement (12.1) formed by the cabling terminations (11) with the connectors (12) passing through the cuts (10) of said first layer (1) and a second arrangement (12.2) formed by the cabling terminations (11) with the connectors which remain outside the first covering layer (1).

Therefore, two arrangements may be distinguished formed by the cabling terminations (11) and connectors (12); A first arrangement (12.1) formed by the cabling terminations (11) and the connectors (12) which are located inside the surface formed by the first covering layer (1); and a second arrangement (12.2) formed by the cabling terminations (11) and the connectors (12) which are located outside the surface formed by the first covering layer (1).

When the cabling (11) has been affixed to the first covering layer (1) the first arrangement (12.1) formed by the cabling terminations (11) with the connectors (12) is passed through the cuts (10) provided in the first covering layer (1). In this way, the main cabling (11) and the second arrangement (12.2) formed by the cabling terminations (11) with the connectors (12) is situated on the first face (1.1) of the first covering layer (1) and the first arrangement (12.1) formed by the cabling terminations (11) with the connectors (12) is situated on the second face (1.2) of the first covering layer (1).

The second arrangement (12.2) formed by the cabling terminations (11) with the connectors (12) which are situated on the outside of the surface of the first covering layer (1), may also be passed through the cuts in the layer to the second face (1.2) of the first covering layer (1). This particular configuration is not represented in the figures.

Figure 9 shows a diagram of the attachment means (13) used in order to fix the position of the first arrangement (12.1) formed by the cabling terminations (11) with the connectors (12) to the second face (1.2) of the first covering layer (1).

In order to fix the position of the first arrangement (12.1) formed by the cabling terminations (11) with the connectors (12) to the second face (1.2) of the first covering layer (1), in such a way that the exact position is not lost during the subsequent formation stage, attachment means (13) are used which may consist of, for example, an adhesive tape.

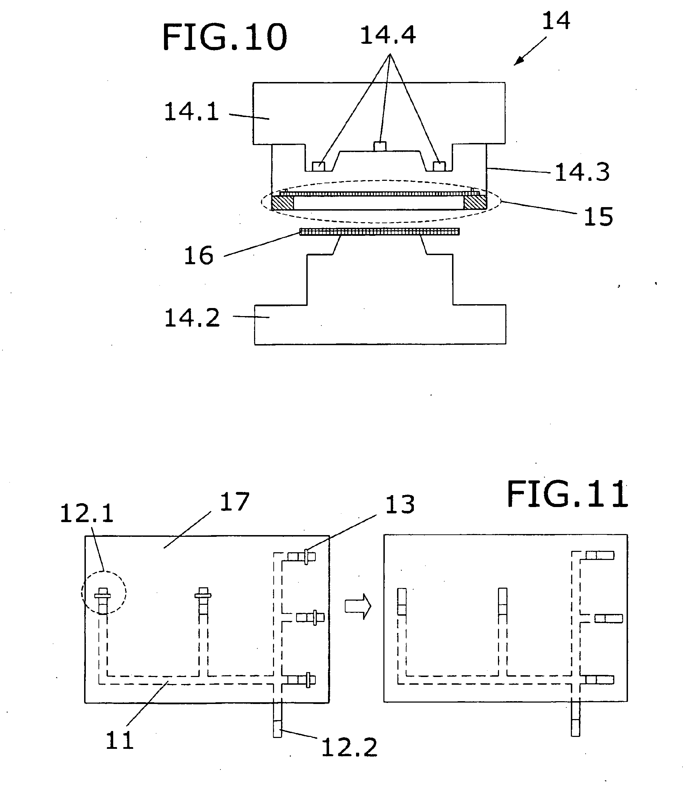

Figure 10 shows a diagram of the layering formation mould (14).

The formation mould (14) comprises two main parts, the mould (14.1) and the countermould (14.2). In this case, the mould (14.1) is the mobile part thereof, so that in order to carry out the formation, this mould (14.1) is brought to the countermould (9.2).

The mould (14.1) is provided with a support (14.3) consisting of bars with an L-shaped profile where the arrangement (15) formed by the frame (7), the first covering layer (1), the cabling (11), and the connectors (12) are positioned. In this way, the reference is obtained for all the elements arranged on the frame (9) with respect to the remaining layers (16) which constitute the layer (the support (2) and the second layer (3) of the decorative covering).

The remaining layers (16) which form the layering are positioned on the countermould (14.2).

When the formation mould (14) is closed and prior to commencing the layering formation process, the frame (7) on which the first covering layer (1) is positioned along with the cabling (11) and the connectors (12) is removed from the formation mould (14).

Subsequently pressure is applied to the various layers which make up the layering (the first covering layer (1), the support (2) and the second decorative covering layer (3)), and the formation is produced with the integration of the cabling between the first covering layer (1) and the remaining layers (16) which make up the panel (5). In addition, if a heat formation process is used, temperatures may also be applied during the formation process.

As has been mentioned, two arrangements are distinguished formed by the cabling terminations (11) and connectors (12); a first arrangement (12.1) which remains in the interior of the surface of the first covering layer, and a second arrangement (12.2) which is situated outside the surface of said first layer (1).

In order to house the connectors (12) associated with the first arrangement (12.1), the mould (14.1) is provided with cavities (14.4) designed to house the connectors (12) in its interior, in such a way that during the formation of the layer and due to the application of pressure, these connectors (12) do not deteriorate through crushing.

The connectors (12) associated with the second arrangement (12.2) are located outside the formation mould (14) and therefore there is no risk of deterioration of the connectors (12) associated with this second arrangement (12.2) during the formation stage of the layering.

Figure 11 shows a diagram of the formed layering (17) once it has left the formation mould (9)and a diagram of the formed layering (17) once the attachment means (13) of the first arrangement (12.1) formed by the cabling terminations (11) with the connectors (12) have been removed.

The arrangement formed by the formed layering (17) has been given a particular reference in order to distinguish it from the panel (5) as a finished product. The arrangement formed by the layers which make up the layering (the first covering layer (1), the support (2) and the second covering layer (3) have been termed formed layering (17) once they have been formed with the cabling (11) and the connectors (12).

When the formed layering (17) of the formation mould (14) is removed, the attachment means (13) used to prevent loss of position of the first arrangement (12.1) formed by the cabling terminations (11) with the connectors (12) during the formation stage of the layering are also removed.

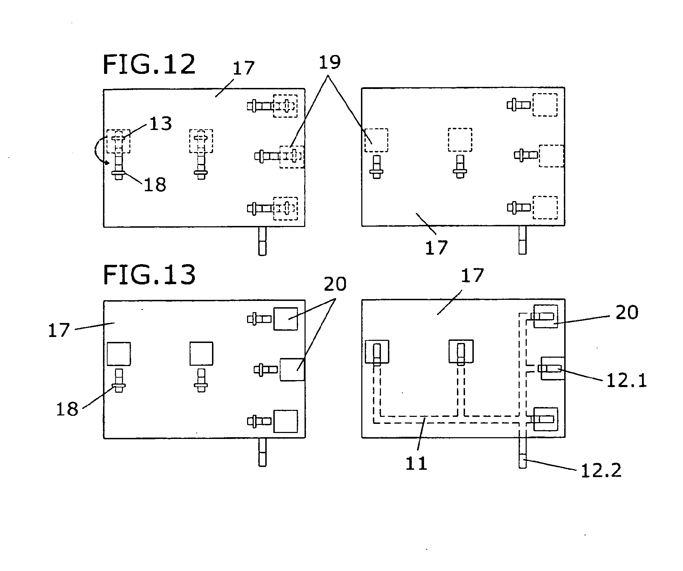

Figure 12 shows a diagram of the formed layering (17) with the first arrangement (12.1) formed by the cabling terminations (11)with the connectors (12)affixed to the second face (1.2) of the first covering layer (1) outside the areas (19)which are to be cut in order to house the devices (6) designed to be mounted on the panel.

A difference is made between the area (19) to be cut from the formed layering (17) and the hole (29) already cut.

When the formed layering (17) has been obtained the requisite holes (20) designed to accommodate the various devices (6) to be mounted on the panel (5) are cut out. In order to carry out this operation, it is necessary to remove the first arrangement (12.1) formed by the cabling terminations (11) with the connectors (12) of the areas (19) of the formed layering (17) which will be cut to prevent cutting or tearing of these areas of the cabling (11). In order to do so, the first arrangement (12.1) formed by the cabling terminations (11) with the connectors (12) outside these cut areas (19) is affixed with adhesive means (18) such as, for example, adhesive tape, so that the areas (19) to be cut are clear, enabling them to be cut without involving any risk. In this case the first arrangement (12.1) formed by the cabling terminations (11) with the connectors (12) is folded by turning them 180° and affixing them with attachment means (18) to the second face (1.2) of the first covering layer (1).

In the case of the second arrangement (12.2) formed by the cabling terminations (11) and the connectors (12) which emerge from the surface of the first covering layer (1), it will also be necessary to affix them to the second face (1.2) of the first covering layer (1) in order to proceed to cutting of the perimeter of the formed layering (17) in the event that such a perimeter cut is required.

Figure 13 shows a diagram of the formed layering (17) with the holes (20) cut and with the first arrangement (12.1) formed by the cabling terminations (11) with the connectors (12) positioned outside these holes (20) and a diagram of the layering with the first arrangement (12.1) formed by the cabling terminations (11) and the connectors (12) situated in the holes (20).

Finally the requisite holes (20) are cut for mounting the devices (6) designed to be installed on the panel (5). The cutting means used may be, for example, pressurised water. When the requisite holes (20) have been cut, the attachment means (18) used to attach the first arrangement (12.1) formed by the cabling terminations (11) with the connectors (12) are removed and positioned in the holes (20) in order to leave them in an appropriate and accessible position for mounting those devices designed to be electrically connected and which will be installed on the panel.

## Claims

1. Procedure for manufacturing vehicle roof panel **characterised in that** it comprises the following stages:
a) An initial layer is provided formed by a first covering layer designed to be situated on the concealed face of the roof panel;
b) The first layer formed by an initial covering layer (1), is affixed in an extended manner on a frame (7) where, in this first layer, a first face (1.1)is defined designed to receive cabling (11); and the second face (1.2) facing the first (1.1), designed to remain facing the vehicle roof plate (4);
c) A flat cabling configuration (11) is extended on the first face (1.1) of the first covering layer (1) with connectors (12) on its terminations where these connectors (12)are designed to make an electrical connection; and, where the first covering layer (1) has cuts (10) for the transit of at least one connector (12) to the second face (1.2) of the first covering layer (1) in such a way that the connector(s) (12) situated on the second face (1.2)are positioned with respect to the frame (7) coinciding with the devices (6)designed to be installed on the roof panel (5);
d) A roof panel (5) formation mould (14) is provided, comprising a mould (14.1) and a countermould (14.2), in which the arrangement (15) formed by the frame (7) is affixed to the first covering layer (1), the cabling (11) and its connectors (12)in such a way that, either the mould (14.1) or the countermould (14.2) are provided with cavities (14.4) designed to accommodate the connectors (12);
e) The remaining layers (16) which make up the roof panel (5) are incorporated in the formation mould (14), with these layers comprising at least one support (2) and a second decorative covering layer (3), with said layers (16) coinciding with the first face (1.1) of the first covering layer (1) such that the cabling (11) remains situated between the first covering layer (1) and the other layers (16) provided;
f) The layering is formed by closing the formation mould (14) in order to obtain the formed layers (17);
g) The formation mould (14) is opened and the formed layering (17) in its interior is removed.
h) The areas (19) corresponding to the devices (6) to be installed on the roof panel (5)are cut out;

2. Procedure for manufacturing a vehicle roof panel according to claim 1, **characterised in that** it prior to carrying out stage c) the position is determined using means for positioning (8) cuts (10) to permit the transit of a first arrangement (12.1) formed by the cabling terminations (11) with the connectors (12) which need to be situated on the second face (1.2) of the first covering layer (1).

3. Procedure for manufacturing a vehicle roof panel according to claim 2 **characterised in that** the cuts (10) are made on the first covering layer (1) determined by the positions defined in the positioning stage.

4. Procedure for manufacturing a vehicle roof panel according to claim 3 **characterised in that** having made the cuts (10) in the first covering layer (1) the connection means (9) are provided for affixing the flat cabling (11) to the first face (1.1) of the first covering layer (1).

5. Procedure for manufacturing a vehicle roof panel according to claim 1 **characterised in that**, prior to carrying out stage c), the connection means (9) are provided for affixing the flat cabling (11) to the first face (1.1) of the first covering layer (1).

6. Procedure for manufacturing a vehicle roof panel according to claim 1 **characterised in that** following stage c) the position of the first arrangement (12.1)formed by the cabling terminations (11) and the connectors (12) is affixed to the second face (1.2) of the first covering layer (1) by connection means (13) such as, for example, adhesive tape.

7. Procedure for manufacturing a vehicle roof panel according to claim 1 **characterised in that** prior to carrying out stage d), the arrangement (15) formed by the frame (7), the first covering layer (1), the flat cabling (11) and the connectors (12), is transferred to the roof panel formation mould (14).

8. Procedure for manufacturing a vehicle roof panel according to claims 1 or 7 **characterised in that** the formation mould (14) is provided with a support (14.3) whereby the arrangement (15) formed by the frame (7), the first covering layer (1), the flat cabling (11) and the connectors (12) is positioned.

9. Procedure for manufacturing a vehicle roof panel according to claim 8, **characterised in that** the support (14.3) whereby the arrangement (15) formed by the frame (7), the first covering layer (1), the flat cabling (11) and the connectors (12) is referenced with respect to the formation mould (14) in such a way that it remains in a specific position with respect to the remaining layers (16) which make up the layering.

10. Procedure for manufacturing a vehicle roof panel according to claim 9, **characterised in that** the support (14.3) is removed from the formation mould (14) when it is closed and prior to commencing the formation stage.

11. Procedure for manufacturing a vehicle roof panel according to claim 1, **characterised in that** prior to carrying out stage h) the first arrangement (12.1) formed by the cabling terminations (11) and the connectors (12) of the area (19) or cut areas which coincide with the devices (6) designed to be installed on the roof panel (5) is removed, in order to protect the first arrangement (12.1) formed by the cabling terminations (11) and the connectors (12) during the cutting operation.

12. Procedure for manufacturing a vehicle roof panel according to claim 11, **characterised in that** the first arrangement (12.1) formed by the cabling terminations (11) and the connectors (12) are maintained outside the cut area (13)by attachment means (18) such as, for example, adhesive tape.

13. Procedure for manufacturing a vehicle roof panel according to claims 11 or 12 **characterised in that** having carried out stage h) the first arrangement (12.1) formed by the cabling terminations (11) and the connectors (12)is released and the cut area (20) is positioned in order to place the devices (16) designed to be connected.

14. Procedure for manufacturing a vehicle roof panel according to claim 1 **characterised in that** the cabling is provided with a second arrangement (12.2) formed by the cabling terminations (11) and the connectors (12) which remain outside the surface of the first covering layer (1) during the formation stage.

15. Procedure for manufacturing a vehicle roof panel according to claim 14 **characterised in that** the second arrangement (12.2) formed by the cabling terminations (11) and the connectors (12), is attached to the second face (1.2) of the first covering layer (1) in order do make the perimeter cut of the formed layering (17).

16. Procedure for manufacturing a vehicle roof panel according to claim 1, **characterised in that** prior to commencing stage f) the frame (7) is removed from the formation mould (14).

## Patentansprüche

1. Verfahren zur Herstellung einer Dachverkleidung für Fahrzeuge, das sich durch die folgenden Phasen auszeichnet:
a) Eine erste Abdeckschicht, die zur Anbringung an der verborgenen Seite der Dachverkleidung ausgelegt ist, bildet die Anfangsschicht;
b) Die erste Abdeckschicht (1) bildet die erste Schicht und wird ausgebreitet auf einem Rahmen (7) befestigt, wobei eine erste Seite (1.1) dieser ersten Schicht zur Unterbringung von Verkabelung (11) konzipiert ist und die der ersten Seite (1.1) gegenüberliegende zweite Seite (1.2) für die Position gegenüber der Dachplatte (4) des Fahrzeugs ausgelegt ist;
c) An den Enden der ersten Seite (1.1) der ersten Abdeckschicht (1) ist eine flache Kabelanordnung (11) mithilfe von Anschlussstücken (12) ausgebreitet, welche zur Herstellung von elektrischem Kontakt entworfen sind, wobei die erste Abdeckschicht (1) für den Durchgang mindestens eines Anschlussstücks (12) zur zweiten Seite (1.2) der ersten Abdeckschicht (1) Einschnitte (10) besitzt, die derart ausgeführt sind, dass die Position(en) des (der) an der zweiten Seite (1.2) gelegenen Anschlussstücks(-e) (12) bezüglich des Rahmens (7) mit den Vorrichtungen (6) übereinstimmen, die zur Installation an der Dachverkleidung (5) vorgesehen sind.
d) Eine Gussform (14) zur Formung der Dachverkleidung (5) umfasst eine Form (14.1) und ein Gegenstück derselben (14.2), wobei man die aus dem Rahmen (7) bestehende Anordnung (15) derart an der ersten Abdeckschicht (1), der Verkabelung (11) und ihren Anschlussstücken (12) befestigt, dass entweder die Form (14.1) oder ihr Gegenstück (14.2) mit Hohlräumen (14.4) zur Unterbringung der Anschlussstücke (12) ausgestattet ist.
e) Die verbleibenden Schichten (16), welche die Dachverkleidung (5) bilden, werden in die Gussform (14) aufgenommen und umfassen mindestens eine Auflage (2) und eine zweite dekorative Abdeckschicht (3), wobei diese Schichten (16) mit der ersten Seite (1.1) der ersten Abdeckschicht (1) derart zusammentreffen, dass die Verkabelung (11) zwischen der ersten Abdeckschicht (1) und den besagten anderen Schichten (16) untergebracht ist;
f) Durch Schließen der Gussform (14) werden die Schichten (17) geformt;
g) Nach Öffnen der Gussform (14) entfernt man die geformten Schichten (17) aus ihrem Inneren.
h) Die Flächen (19), die den Stellen der Vorrichtungen (6) zur Montage auf der Dachverkleidung (5) entsprechen, werden herausgeschnitten.

2. Verfahren zur Herstellung einer Dachverkleidung für Fahrzeuge gemäß Anspruch 1, **dadurch gekennzeichnet, dass** man vor der Ausführung von Phase c) die Einschnitte (10) mithilfe von Vorrichtungen zur Positionierung (8) vornimmt und so den Durchgang einer ersten Anordnung (12.1) ermöglicht, die aus den Kabelenden (11) und den Anschlussstücken (12) besteht, welche an der zweiten Seite (1.2) der ersten Abdeckschicht (1) anzubringen sind.

3. Verfahren zur Herstellung einer Dachverkleidung für Fahrzeuge gemäß Anspruch 2, **dadurch gekennzeichnet, dass** man die Einschnitte (10) in der ersten Abdeckschicht (1) gemäß den in der Positionierungsphase bestimmten Positionen ausführt.

4. Verfahren zur Herstellung einer Dachverkleidung für Fahrzeuge gemäß Anspruch 3, **dadurch gekennzeichnet, dass** man nach Ausführen der Einschnitte (10) in der ersten Abdeckschicht (1) die Anschlussvorrichtungen (9) zur Befestigung der Flachverkabelung (11) an der ersten Seite (1.1) der ersten Abdeckschicht (1) bereitstellt.

5. Verfahren zur Herstellung einer Dachverkleidung für Fahrzeuge gemäß Anspruch 1, **dadurch gekennzeichnet, dass** man vor der Ausführung von Phase c) die Anschlussvorrichtungen (9) zur Verbindung der Flachverkabelung (11) an der ersten Seite (1.1) der ersten Abdeckschicht (1) bereitstellt.

6. Verfahren zur Herstellung einer Dachverkleidung für Fahrzeuge gemäß Anspruch 1, **dadurch gekennzeichnet, dass** man nach Ausführen von Phase c) die erste Anordnung (12.1), die aus den Kabelenden (11) und den Anschlussstücken (12) besteht, an ihrer Position an der zweiten Seite der ersten Abdeckschicht (1) befestigt und hierfür Befestigungsvorrichtungen (13) verwendet, wie beispielsweise ein Klebeband.

7. Verfahren zur Herstellung einer Dachverkleidung für Fahrzeuge gemäß Anspruch 1, **dadurch gekennzeichnet, dass** man vor der Ausführung von Phase d) die Anordnung (15), die aus dem Rahmen (7), der ersten Abdeckschicht (1), der Flachverkabelung (11) und den Anschlussstücken (12) besteht, zur Gussform (14) der Dachverkleidung weiterleitet.

8. Verfahren zur Herstellung einer Dachverkleidung für Fahrzeuge gemäß Anspruch 1 oder 7, **dadurch gekennzeichnet, dass** die Gussform (14) mit einer Halterung (14.3) ausgestattet ist, in welcher die aus dem Rahmen (7), der ersten Abdeckschicht (1), der Flachverkabelung (11) und den Anschlussstücken (12) bestehende Anordnung (15) angebracht wird.

9. Verfahren zur Herstellung einer Dachverkleidung für Fahrzeuge gemäß Anspruch 8, **dadurch gekennzeichnet, dass** die Halterung (14.3) die Position der Anordnung (15) aus dem Rahmen (7), der ersten Abdeckschicht (1), der Flachverkabelung (11) und den Anschlussstücken (12) bezüglich der Gussform (14) derart vorgibt, dass diese Anordnung eine spezifische Position hinsichtlich der verbleibenden Schichten (16) des Schichtenaufbaus einnimmt.

10. Verfahren zur Herstellung einer Dachverkleidung für Fahrzeuge gemäß Anspruch 9, **dadurch gekennzeichnet, dass** man die Halterung (14.3) bei Schließen der Gussform (14) aus derselben entfernt, bevor die Formungsphase beginnt.

11. Verfahren zur Herstellung einer Dachverkleidung für Fahrzeuge gemäß Anspruch 1, **dadurch gekennzeichnet, dass** man vor Ausführen von Phase h) die erste Anordnung (12.1), welche aus den Kabelenden (11) und den Anschlussstücken (12) der Fläche (19) besteht, oder die ausgeschnittenen Flächen, die zur Installation an der Dachverkleidung mit den Vorrichtungen (6) zusammentreffen, entfernt, um die besagte aus den Kabelenden (11) und den Anschlussstücken (12) bestehende erste Anordnung (12.1) beim Schnittvorgang zu schützen.

12. Verfahren zur Herstellung einer Dachverkleidung für Fahrzeuge gemäß Anspruch 11, **dadurch gekennzeichnet, dass** man die aus den Kabelenden (11) und den Anschlussstücken (12) bestehende erste Anordnung (12.1) mittels Befestigungsvorrichtungen (18), wie beispielsweise Klebeband, vom Schnittbereich (13) fernhält.

13. Verfahren zur Herstellung einer Dachverkleidung für Fahrzeuge gemäß Anspruch 11 oder 12, **dadurch gekennzeichnet, dass** man nach Ausführung von Phase h) die aus den Kabelenden (11) und den Anschlussstücken (12) bestehende erste Anordnung (12.1) freigibt und den Schnittbereich (20) entsprechend positioniert, um die anzuschließenden Einrichtungen (16) an ihrem Platz anzubringen.

14. Verfahren zur Herstellung einer Dachverkleidung für Fahrzeuge gemäß Anspruch 1, **dadurch gekennzeichnet, dass** die Verkabelung mit einer zweiten Anordnung (12.2) ausgestattet ist, welche die Kabelenden (11) und die Anschlussstücke (12) umfasst, die während der Formungsphase außerhalb der Oberfläche der ersten Abdeckschicht (1) verbleiben.

15. Verfahren zur Herstellung einer Dachverkleidung für Fahrzeuge gemäß Anspruch 14, **dadurch gekennzeichnet, dass** man die zweite, aus den Kabelenden (11) und den Anschlussstücken (12) bestehende Anordnung (12.2) an der zweiten Seite (1.2) der ersten Abdeckschicht (1) befestigt, um den Schnitt am Umfang der geformten Schichten (17) auszuführen.

16. Verfahren zur Herstellung einer Dachverkleidung für Fahrzeuge gemäß Anspruch 1, **dadurch gekennzeichnet, dass** man vor Ausführen der Phase f) den Rahmen aus der Gussform (14) entfernt.

## Revendications

1. Procédé de fabrication d'un pavillon de véhicule **caractérisé en ce qu'**il comprend les étapes suivantes :
a) On prévoit une couche initiale formée par une première couche de revêtement conçue pour être située sur la face cachée du pavillon ;
b) la première couche formée par une couche (1) de revêtement initiale, est fixée d'une manière étendue sur un châssis (7), où, dans cette première couche, une première face (1.1) est définie conçue pour recevoir un câblage (11); et la deuxième face (1.2) étant en regard de la première (1.1), conçue pour demeurer en regard de la plaque (4) de toit de véhicule.
c) Une configuration de câblage (11) plat s'étend sur la première face (1.1) de la première couche (1) de revêtement avec des connecteurs (12) sur ses terminaisons où ces connecteurs (12) sont conçus pour réaliser une connexion électrique; et, où la première couche (1) de revêtement à des entailles (10) pour le passage d'au moins un connecteur (12) à la deuxième face (1.2) de la première couche (1) de revêtement de telle manière que le ou les connecteurs (12) situées sur la deuxième face (1.2) sont positionnés par rapport au châssis (7) coïncidant avec les dispositifs (6) conçus pour être installés sur le pavillon (5) ;
d) On prévoit un moule (14) de formation de pavillon (5) comprenant un moule (14.1) et un contremoule (14.2), dans lequel l'aménagement (15) formé par le châssis (7) est fixé à la première couche (1) de revêtement, le câblage (11) et ses connecteurs (12) de telle manière que, soit le moule (14.1) soit le contremoule (14.2) sont pourvus de cavités (14.4) conçues pour loger les connecteurs (12).
e) Les couches (16) restantes qui constituent le pavillon (5) sont incorporées dans le moule (14) de formation, ces couches comprenant au moins un support (2) et une deuxième couche (3) de revêtement décoratif, lesdites couches (16) coïncidant avec la première face (1.1) de la première couche (1) de revêtement de sorte que le câblage (11) demeure situé entre la première couche (1) de revêtement et les autres couches (16) prévues ;
f) La structure en couche se forme en fermant le moule (14) de formation afin d'obtenir les couches (17) formées ;
g) On ouvre le moule (14) de formation et on retire la structure en couche (17) de son intérieur.
h) On coupe les zones (19) correspondant aux dispositifs (6) à installer sur le pavillon.

2. Procédé de fabrication d'un pavillon de véhicule selon la revendication 1, **caractérisé en ce que** préalablement à la mise en oeuvre de l'étape c) on détermine la position en utilisant des moyens pour positionner (8) les entailles (10) pour permettre le passage d'un premier aménagement (12.1) formé par les terminaisons de câblage (11) avec les connecteurs (12) ayant besoin de se situer sur la deuxième face (1.2) de la première couche (1) de revêtement.

3. Procédé de fabrication d'un pavillon de véhicule selon la revendication 2, **caractérisé en ce que** les entailles (10) sont réalisées sur la première couche (1) de revêtement déterminée par positions définies lors de l'étape de positionnement.

4. Procédé de fabrication d'un pavillon de véhicule selon la revendication 3, **caractérisé en ce qu'**en réalisant les entailles (10) dans la première couche (1) de revêtement, on prévoit les moyens de connexion (9) pour fixer le câblage (11) plat à la première face (1.1) de la première couche (1) de revêtement.

5. Procédé de fabrication d'un pavillon de véhicule selon la revendication 1, **caractérisé en ce que** préalablement à la mise en oeuvre de l'étape c), on prévoit les moyens de connexion (9) pour fixer le câblage (11) plat à la première face (1.1) de la première couche (1) de revêtement.

6. Procédé de fabrication d'un pavillon de véhicule selon la revendication 1 **caractérisé en ce que** selon l'étape c) la position du premier aménagement (12.1) formé par les terminaisons (11) de câblage et les connecteurs (12) se fixe à la deuxième face (1.2) de la première couche (1) de revêtement par des moyens de connexion (13) tels que, par exemple, du ruban adhésif.

7. Procédé de fabrication d'un pavillon de véhicule selon la revendication 1 **caractérisé en ce que** préalablement à la mise en oeuvre de l'étape d), l'aménagement (15) formé par le châssis (7), la première couche (1) de revêtement, le câblage (11) plat et les connecteurs (12), est transféré au moule (14) de formation de pavillon.

8. Procédé de fabrication d'un pavillon de véhicule selon les revendications 1 ou 7, **caractérisé en ce que** le moule (14) de formation est pourvu d'un support (14.3), favorisant le positionnement de l'aménagement (15) formé par le châssis (7), la première couche (1) de revêtement, le câblage (11) plat et les connecteurs (12).

9. Procédé de fabrication d'un pavillon de véhicule selon la revendication 8, **caractérisé en ce que** le support (14.3) favorisant le référencement de l'aménagement (15) formé par le châssis (7), la première couche (1) de revêtement, le câblage (11) plat et les connecteurs par rapport au moule (14) de formation de telle manière qu'il demeure dans une position spécifique par rapport aux couches (16) restantes qui constituent la structure en couche.

10. Procédé de fabrication d'un pavillon de véhicule selon la revendication 9, **caractérisé en ce que** le support (14.3) est retiré du moule (14) de formation lorsqu'il est fermé et avant de commencer l'étape de formation.

11. Procédé de fabrication d'un pavillon de véhicule selon la revendication 1, **caractérisé en ce que** préalablement à la mise en oeuvre de l'étape h) le premier aménagement (12.1) formé par les terminaisons (11) de câblage et les connecteurs (12) de la zone ou les zones (19) coupées qui coïncident avec les dispositifs (6) conçus pour être installés sur le pavillon (5) est retiré, afin de protéger le premier aménagement (12.1) formé par les terminaisons (11) de câblage et les connecteurs (12) pendant l'opération de coupage.

12. Procédé de fabrication d'un pavillon selon la revendication 11, **caractérisé en ce que** le premier aménagement (12.1) formé par les terminaisons (11) de câblage et les connecteurs (12) se maintient en dehors de la zone (13) coupée par des moyens de fixation (18) tels que par exemple, du ruban adhésif.

13. Procédé de fabrication d'un pavillon de véhicule selon les revendications 11 ou 12 **caractérisé en ce qu'**en mettant en oeuvre l'étape h) le premier aménagement (12.1) formé par les terminaisons (11) de câblage et les connecteurs (12) est libéré et la zone (20) coupée est positionnée afin de mettre en place les dispositifs (16) conçus pour être connectés.

14. Procédé de fabrication d'un pavillon de véhicule selon la revendication 1, **caractérisé en ce que** le câblage est pourvu d'un deuxième aménagement (12.2) formé par les terminaisons (11) de câblage et les connecteurs (12) qui demeurent en dehors de la surface de la première couche (1) de revêtement pendant l'étape de formation.

15. Procédé de fabrication d'un pavillon de véhicule selon la revendication 14, **caractérisé en ce que** le deuxième aménagement (12.2) formé par les terminaisons (11) de câblage et les connecteurs (12), est fixé à la deuxième face (1.2) de la première couche (1) de revêtement afin de réaliser le coupage périmétral de la structure en couche formée (17).

16. Procédé de fabrication d'un pavillon de véhicule selon la revendication 1, **caractérisé en ce que** préalablement à l'étape de commencement f) le châssis (7) est retiré du moule (14) de formation.
